# EUROPÄISCHE PATENTANMELDUNG

(11) **EP 1 261 014 A2**
(43) Veröffentlichungstag der Anmeldung: **27.11.2002**
(21) Anmeldenummer: 02100465.0
(22) Anmeldetag: 08.05.2002
(51) Int. Cl.: H01J 17/49, H01J 17/16

(54) **Plasmabildschirm mit Pixelmatrix-Array**

(30) Priorität: 12.05.2001 DE 10123235
(71) Anmelder: Philips Corporate Intellectual Property GmbH, 20099 Hamburg (DE); Koninklijke Philips Electronics N.V., 5621 BA Eindhoven (NL)
(72) Erfinder: Bechtel, H. Dr. c/o Philips Corp.Intell.Prop.GmbH, 52066, Aachen (DE); Busselt, W. c/o Philips Corp. Intell. Prop. GmbH, 52066, Aachen (DE); Gläser, H. Dr. c/o Philips Corp.Intell.Prop. GmbH, 52066, Aachen (DE)
(74) Vertreter: Volmer, Georg, Dipl.-Ing.

(57) **Zusammenfassung**

Plasmabildschirm ausgerüstet mit einer Trägerplatte, einer durchsichtigen Frontplatte, einer Rippenstruktur, die den Raum zwischen Trägaplatte und Frontplatte in Entladungszellen, die mit einem Gas gefüllt sind, aufteilt, mit einer oder mehreren Elektroden-Arrays auf der Frontplatte und auf der Trägerplatte zur Erzeugung von stillen elektrischen Entladungen in den Entladungszellen und mit einer segmentierten Leuchtstoffschicht, der eine Pixelmatrix-Array umfasst, in dem Entladungszellen für Rot, Grün und Blau zur Bildung eines Pixels gruppiert sind, wobei jedes Pixel eine Entladungszelle für Blau umfaßt, die je zwei benachbarten Pixeln gemeinsam ist.

## Beschreibung

Die Erfindung betrifft einen Plasmabildschirm ausgerüstet mit einer Trägerplatte, einer durchsichtigen Frontplatte, einer Rippenstruktur, die den Raum zwischen Trägerplatte und Frontplatte in Entladungszellen, die mit einem Gas gefüllt sind, aufteilt, mit einer oder mehreren Elektroden-Arrays auf der Frontplatte und auf der Trägerplatte zur Erzeugung von stillen elektrischen Entladungen in den Entladungszellen, der eine Pixelmatrix-Array umfasst, in dem Entladungszellen für drei Farben, nämlich Rot, Grün und Blau, zur Bildung eines Pixels gruppiert sind

Das Grundprinzip eines Plasmabildschirms besteht darin, dass gekreuzte Elektrodenarrays zwischen einer Trägerplatte und einer transparenten Frontplatte eine Matrix bilden, zwischen deren sich kreuzenden Einzelelektroden die Spannung so gesteuert werden kann, dass an den Kreuzungspunkten eine Gasentladung stattfindet. Das dadurch entstehende leuchtende Gasplasma zeichnet sich durch die transparente Frontplatte als Leuchtpunkt ab.

In der Farbversion des Plasmabildschirms umfaßt der Bildschirm eine strukturierte Leuchtstoffschicht mit Segmenten zur Erzeugung der Farben Rot, Grün und Blau. Ein Pixel d.h. ein Bildpunkt, umfaßt drei Subpixel für die drei Grundfarben auf jeweils einem Segment der Leuchtstoffschicht. Üblicherweise sind in einem Plasmafarbbildschirm die Segmente der Leuchtstoffschicht für je drei Subpixel nebeneinander in langgestreckten Leuchtstoffstreifen angeordnet und alle Segmente haben die gleiche geometrische Form.

Ein Bild wird erzeugt, wenn die im Plasma erzeugte UV-Strahlung auf den jeweiligen Leuchtstoff eines Subpixel einer Triade auftrifft und dieser mehr oder weniger hell in seiner Farbe aufleuchtet. Die Subpixel einer Triade liegen so eng nebeneinander, dass das menschliche Auge sie als einen Bildpunkt wahrnimmt.

Die Leuchtstoffe für die Subpixel in Rot, Grün und Blau haben allerdings unterschiedliche Eigenschaften einerseits in Bezug auf ihr Langzeitverhalten, aber auch in der Farbsättigung und in der Wahrnehmbarkeit.

Es ist schon vorgeschlagen worden, das unterschiedliche Verhalten von roten, grünen und blauen Subpixeln durch eine unterschiedliche geometrische Form und Anordnung der Subpixel auszugleichen.

Aus WO 97/11477 ist ein Plasmafarbbildschirm bekannt, der eine Pixelmatrix-Array umfasst, in dem Entladungszellen für drei Farben, nämlich Rot, Grün und Blau zur Bildung eines Pixels gruppiert sind, wobei das Pixel eine blaue Entladungszelle umfaßt, die eine Länge hat die kleiner ist als die Gesamtlänge des Pixels und eine Breite, die der Breite des Pixels entspricht und rote und grüne Entladungszellen lateral nebeneinander angeordnet sind, wobei die rote und grüne Entladungszelle eine Länge haben, die der Differenz zwischen der ganzen Pixellänge und der Länge des blauen Pixels entspricht, und eine Breite haben, die weniger als die Hälfte der ganzen Pixelbreite beträgt. Dadurch lassen sich Luminanzunterschiede zwischen den drei Arten von Entladungszellen ausgleichen und ein verbesserter Weißausgleich und optimale Luminanz erreichen.

In diesem Plasmafarbbildschirm sind die einzelnen Pixel größer als die konventioneller Plasmafarbbildschirme, weil die Fläche der blauen Entladungszelle 1.5 bis 2 mal größer ist als die Fläche der roten und grünen Entladungszelle.

Es ist jedoch gerade ein Nachteil - auch der konventionellen Plasmafarbbildschirme-, dass sich die Pixelgröße nicht genügend reduzieren läßt.

Es ist eine Aufgabe der vorliegenden Erfindung einen Plasmafarbbildschirm mit verbesserter Auflösung bzw. verbesserter Luminanz zu schaffen.

Erfindungsgemäß wird die Aufgabe gelöst durch einen Plasmabildschirm ausgerüstet mit einer Trägerplatte, einer durchsichtigen Frontplatte, einer Rippenstruktur, die den Raum zwischen Trägerplatte und Frontplatte in Entladungszellen, die mit einem Gas gsfüllt sind, aufteilt, mit einer oder mehreren Elektroden-Arrays auf der Frontplatte und auf der Trägsrplatte zur Erzeugung von stillen elektrischen Entladungen in den Entladungszellen und mit einer segmentierten Leuchtstoffschicht, der eine Pixelmatrix-Array umfasst, in dem Entladungszellen für Rot, Grün und Blau zur Bildung eines Pixels gruppiert sind, wobei jedes Pixel eine Entladungszelle für Blau umfaßt, die je zwei benachbarten Pixeln gemeinsam ist.

Der Erfindung liegt der Gedanke zugrunde, dass das menschliche Auge eine Strahlungsdichte für verschiedene Farben als deutlich verschiedene Helligkeit oder Luminanz wahrnimmt. Dagegen wird der wahrgenommene Farbeindruck bei additiver Farbmischung - wie in Plasmafarbbildschirmen im wesentlichen von der Strahlungsdichte der einzelnen Grundfarben bestimmt. Die Empfindlichkeit des menschlichen Auges ist für grünes Licht am größten, danach folgen Rot und Blau. Hieraus resultiert, dass die wahrgenommene Ortsauflösung (spatial resolution) vor allem durch die Ortsauflösung der grün und rot emittierenden Farbflächen der grünen und roten Entladungszellen bestimmt wird. Blaues Licht aus den blauen Entladungszellen trägt vor allem zum Farbeindruck und weniger zur Wiedergabe der blauen Strukturen bei. Deshalb ist es in einem Plasmafarbbildschirm mit diesem Pixelmatrix-Array möglich, die Zahl der blauen Subpixel, bzw. der Entladungszellen für Blau, zu reduzieren.

Besonders vorteilhafte Wirkungen gegenüber dem Stand der Technik entfaltet die Erfindung wenn die Entladungszellen in parallelen langgestreckten Kanälen angeordnet sind. Wenn die Entladungszellen in parallelen Kanälen angeordnet sind, ist es möglich, bei gleichen Abmessungen des Plasmafarbbildschirms gegenüber konventionellen Plasmafarbbildschirmen bei gleicher Anzahl von Pixeln die Kanalbreite um ein Sechstel zu erhöhen. Mit größerer Kanalbreite erhöht sich der elektro-optische Wirkungsgrad der Leuchtstoffe, weil sich die UV-Strahlung aus dem Plasma auf eine größere Fläche verteilt, und die Luminanz steigt. Außerdem reduziert sich damit auch die Zahl der Adresselektroden und der zugehörigen Column-Treiber um ein Sechstel, wodurch die Herstellungskosten sinken.

Besonders bevorzugt ist es, dass das Segment der Leuchtstoffschicht der Entladungszelle für Blau Europium(II)-dotiertes Bariummagnesiumaluminat (BAM) enthält. Europium(II)-dotiertes Bariummagnesiumaluminat als blauemittierender Leuchtstoff zeigt unter VUV-Anregung bis zu hohen Luminanzen keine Sättigung Die bekannten grünen und roten Leuchtstoffe für Plasmafarbbildschirme sättigen dagegen, d.h. ihr elektro-optischer Wirkungsgrad läßt mit zunehmender Anregungsdichte nach. Mit Europium(II)-dotiertes Bariummagnesiumaluminat als blauemittierender Leuchtstoff kann auf einem blauen Subpixel die Summe der Blauluminanzanteile von zwei benachbarten Pixeln dargestellt werden, ohne dass die Weißluminanz des Plasmafarbbildschirms vermindert ist.

In einer weiteren Ausführungsform der Erfindung kann jedes Pixel eine blaue und eine rote Entladungszelle umfassen, die je zwei benachbarten Pixeln gemeinsam ist. Dadurch kann die Pixelzahl auf einer vorgegebenen Bildschirmfläche weiter erhöht werden. Es kann aber auch die Pixelzahl konstant gehalten werden. Dann erhöht sich die Kanalbreite gegenüber dem Stand der Technik um ein Drittel und die Zahl der Adresselektroden und der zugehörigen Column-Treiber kann um ein Drittel erniedrigt werden.

Nachfolgend wird die Erfindung anhand von drei Figuren und einer Figur zum Stand der Technik weiter erläutert
- Fig. 1: zeigt schematisch im Querschnitt den Aufbau eines Ausführungsbeispiels eines Plasmafarbbildschirms vom Oberflächenentladungstyp nach der Erfindung.
- Fig. 2: zeigt schematisch eine Ausführungsform eines Pixelmatrix-Arrays für einen Plasmafarbbildschirm nach der Erfindung
- Fig. 3: zeigt schematisch eine Ausführungsform eines Pixelmatrix-Arrays für einen Plasmafarbbildschirm nach der Erfindung
- Fig. 4: zeigt schematisch eine Ausführungsform eines Pixelmatrix-Arrays für einen Plasmafarbbildschirm nach dem Stand der Technik.

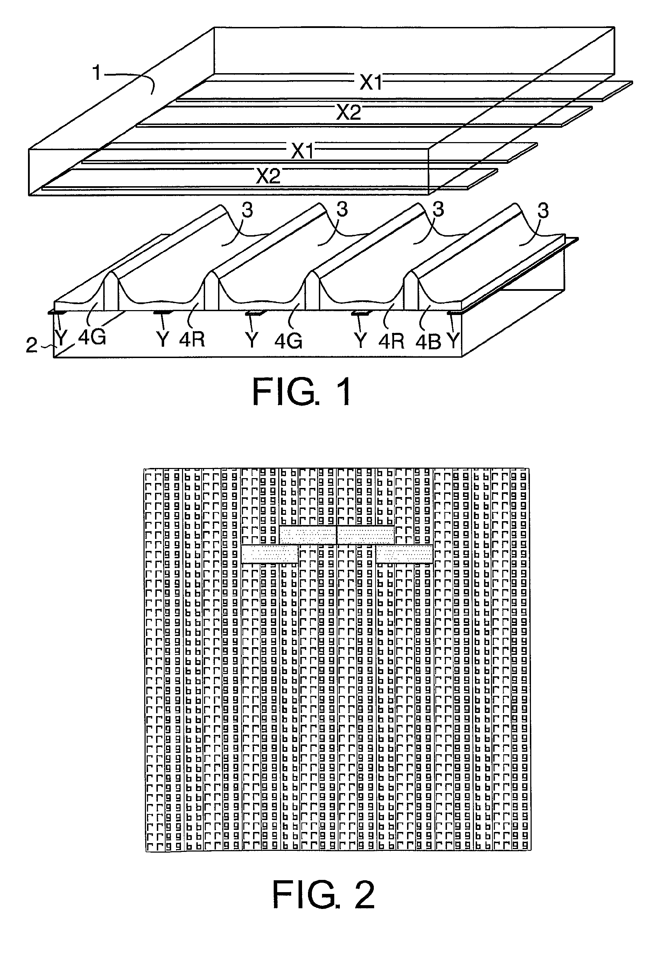

In Fig 1 ist ein Plasmafarbbildschirm vom Oberflächenentladungstyp dargestellt, der aus einem Schichtsystem von übereinander und teilweise nebeneinander aufgetragenen Einzelschichten besteht.

In einem Plasmafarbbildschirm vom Oberflächenentladungstyp wird Licht in einem Plasma durch eine Gasentladung in einem Dreielektroden-System erzeugt. Das Drei-Elektroden-System besteht aus einer Adresselektrode und zwei Entladungselektroden pro Bildpunkt, zwischen denen im Betrieb eine Wechselspannung anliegt.

Der Plasmafarbbildschirm setzt sich aus einer durchsichtigen Frontplatte und einer Trägerplatte zusammen, die auf Abstand voneinander gehalten werden und peripher hermetisch verschlossen sind. Der Raum zwischen beiden Platten bildet den Entladungsraum 3.

Die Frontplatte umfaßt ein Frontsubstrat 1, ein Array von Entladungselektroden X1,X2 auf der inneren Oberfläche des Trägersubstrates und eine transparente dielektrische Schicht, die die Entladungselektroden bedeckt.

Die dielektrische Schicht ist noch mit einer Schutzschicht aus Magnesiumoxid bedeckt, die die Zündspannung für die Gasentladung erniedrigt und verhindert, dass die dielektrische Schicht während der Gasentladung abgesputtert wird

In der gezeigten Ausführungsform sind die Entladungselektroden paarweise zu beiden Seiten eines Entladungskanals angeordnet mit einem größeren Abstand zum nächsten Paar von Entladungselektroden. Jede Entladungselektrode ist als Verbundelektrode aus einer transparenten Streifenelektrode und einer metallischen Buselektrode ausgeführt. Die Buselektrode ist schmaler als die transparente Streifenelektrode und die Streifenelektrode wird teilweise von der Buselektrode bedeckt.

Die Trägerplatte umfaßt ein Trägersubstrat 2, Adresselektroden Y und Leuchtstoffschichten 4R, 4G und 4B. Die Adresselektroden erstrecken sich senkrecht zur Zeichenebene und quer zu der Richtung der Entladungselektroden, so dass an den Kreuzungspunkten jeweils ein Entladung gezündet werden kann. Bevorzugt werden die Entladungselektroden aus einem Metall gefertigt, das wie z. B. Aluminium und Silber im sichtbaren Spektralbereich hoch reflektierend ist.

Individuell ansteuerbare Entladungszellen werden durch eine Rippenstruktur mit Trennrippen gebildet. Eine Rippenstruktur mit geraden, parallelen Trennrippen teilt den Entladungsraum in ununterbrochene vertikale Streifen.

Eine Rippenstruktur mit geknickten oder gewellten Trennrippen teilt den Entladungsraum in perlenschnurartig vertikal aneinandergereihte Entladungszellen mit beispielsweise hexagonalem oder ellipsoidem Querschnitt.

Zwischen den Trennrippen ist die Frontplatte mit einer Leuchtstoffschicht aus Leuchtstoffsegmenten beschichtet. Ein Bildpunkt, i.e. ein Pixel ,ist durch die Kombination von mindestens drei Subpixeln in den Farben Rot, Grün und Blau definiert. Die Subpixel werden durch die drei lumineszierende Leuchtstoffsegmente 4G, 4R und 4B in den Farben Rot, Grün und Blau realisiert. Drei Entladungszellen mit je einem roten, grünen und blauen Leuchtstoffsegment bilden je ein Subpixel und als Triade einen Bildpunkt.

Das Muster der Leuchtstoffsegmente wird durch den Verlauf der Trennrippen vorgegeben und vice versa. In der in Fig 1 gezeigten Ausführungsform bilden die Leuchtstoffsegmente ein In-Line-Streifenmuster, bei dem die Leuchtstoffsegmente ununterbrochene langgestreckte Streifen bilden. Entlang eines Streifens bleibt die Farbe des Leuchtstoffes unverändert.

Nach einer anderen Ausführungsform der Erfindung können die einzelnen Leuchtstoffstreifen in rechteckige Leuchtstoffsegmente (Mondrian-Pixel) für die drei Grundfarben unterteilt sein, die in einem Zick-Zack-Muster oder einem Schwalbenschwanzmuster angeordnet sind.

Die Leuchtstoffsegmente für die Grundfarben Rot, Grün und Blau enthalten jeweils einen rot-, grün- oder blauemittierenden Leuchtstoff. Besonders geeignete Leuchtstoffe sind Leuchtstoffe, die durch den UV-Anteil der Strahlung aus dem Gasplasma anregbar sind.

Geeignet als rotemittierende Leuchtstoffe, die durch UV-Strahlung anregbar sind, sind besonders Leuchtstoffe mit schmalbandiger Emission, wie Europium(III) aktivierte Leuchtstoffe, insbesondere Oxide, Borate und Vanadate, wie z.B. Y2O3:Eu, GdBO3:Eu, YBO3:Eu, (Y,Gd)BO3:Eu, YVO4:Eu, Y(V,B,P)O4:Eu.

Geeignet als blauemittierende Leuchtstoffe, die durch UV-Strahlung anregbar sind, sind, durch Eu(II)-, Tm(III) oder Ce(III)-aktivierte Leuchtstoffe, wie Europium-aktiviertes Bariummagnesiumaluminat, Thulium-aktiviertes Lanthanborat und Cer-aktiviertes Yttriumsilikat.

Geeignet als grünemittierende Leuchtstoffe, die durch UV-Strahlung anregbar sind, sind durch Mangan(II)- und Terbium(III)-aktivierte Leuchtstoffe, wie Mangan(II)-aktiviertes Zinksilikat, Terbium-aktiviertes Yttrium-Gadoliniumborat und Mangan(II)-aktiviertes Magnesiumgallat.

Besonders geeignet für die Erfindung ist Europium-aktiviertes Bariummagnesiumaluminat BaMgAl₁₀O₁₇:Eu als blauemittierender Leuchtstoff, Europium-aktiviertes Yttriumoxid Y₂O₃:Eu oder Europium-aktiviertes Yttriumgadoliniumborat (Y,Gd)BO₃:Eu als rotemittierender Leuchtstoff und Mangan-aktiviertes Zinksilikat Zn₂SiO₄:Mn oder Manganaktiviertes Bariumaluminat BaAl₁₂O₁₉:Mn als grünemittierender Leuchtstoff.

Nach einer Ausführungsform der Erfindung umfaßt der Plasmafarbbildschirm ein Pixelmatrix-Array, in dem je zwei Pixel ein blaues Subpixel gemeinsam haben. Die vollständige Sequenz für die Subpixel-Anordnung umfaßt fünf Subpixel, d.h. zwei rote Subpixel, 2 grüne Subpixel und ein blaues Subpixel.

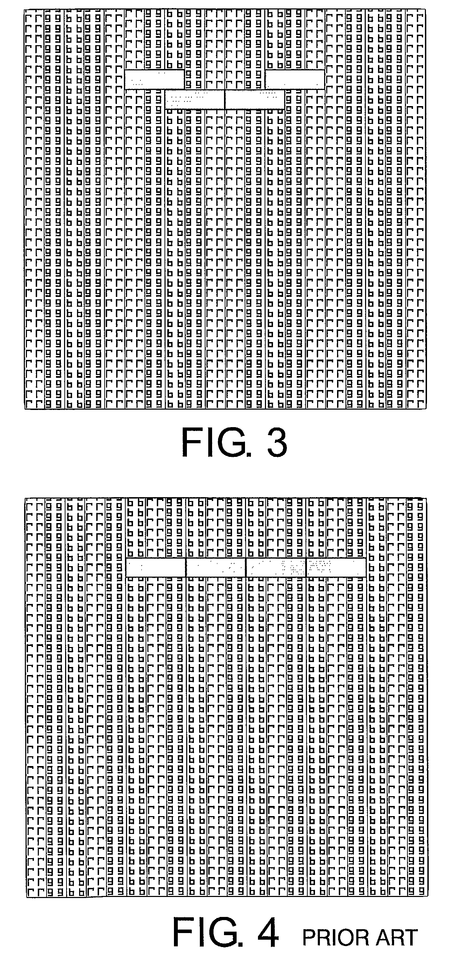

Zwei mögliche Anordnungen der Subpixel sind in Fig. 2 und Fig. 3 gezeigt. Fig. 1 zeigt eine Anordnung der Subpixel in der Reihenfolge RGBRG/RGBRG/RGBRG/...., Fig. 3 zeigt eine Anordnung der Subpixel in der Reihenfolge RGBGR/RGBGR/RGBGR./... Eine weitere mögliche Anordnung der fünf Subpixel ist die Reihenfolge GRBRG/GRBRG/GRBRG/..... .

Fig. 4 zeigt die Anordnung der sechs Subpixel in Rot, Grün und Blau für zwei Pixel nach dem Stand der Technik. Ein Vergleich der Anordnungen der Subpixel in Fig. 3 und Fig. 4 zeigt, dass durch die erfindungsgemäße Anordnung der Subpixel die Pixelgröße um etwa 20% vermindert werden kann.

Nach einer anderen Ausführungsform der Erfindung umfaßt der Plasmafarbbildschirm ein Pixelmatrix-Array, in dem je zwei Pixel ein blaues und ein rotes Subpixel gemeinsam haben. Die vollständige Sequenz für zwei Pixel umfaßt vier Subpixel, d.h. ein rotes Subpixel, ein blaues Subpixel und zwei grüne Subpixel in der Reihenfolge RGBG/RGBG/RGBG ..... Ein Vergleich der Anordnung der Subpixel in dieser Anordnung mit der Anordnung der Subpixel in einem konventionellen Plasmafarbbildschirm zeigt, dass die Pixelgröße um etwa 30% vermindert werden kann.

Der Entladungsraum ist mit einem passenden Entladungsgas gefüllt, z. B. mit Xenon, einem xenonhaltigen Gas, Neon oder einem neonhaltigem Gas. Die Gasentladung wird zwischen den Entladungselektroden 8 auf der Trägerplatte gezündet. In der Entladungszone ist das Gas ionisiert und es entsteht ein Gasplasma, das UV-Strahlung emittiert. Die ausgesendete UV-Strahlung regt bildpunktweise die strukturierte Leuchtstoffschicht mit den roten, grünen und blauen Subpixeln zur Emission von Licht im sichtbaren Bereich an, wodurch der Bildeindruck entsteht. Durch die reduzierte Zahl von blauen und gegebenenfalls roten Subpixeln liegt die Luminanz der Subpixel näher beieinander und der Bildeindruck ist verbessert.

## Patentansprüche

1. Plasmabildschirm ausgerüstet mit einer Trägerplatte, einer durchsichtigen Frontplatte, einer Rippenstruktur, die den Raum zwischen Trägerplatte und Frontplatte in Entladungszellen, die mit einem Gas gefüllt sind, aufteilt, mit einer oder mehreren Elektroden-Arrays auf der Frontplatte und auf der Trägerplatte zur Erzeugung von stillen elektrischen Entladungen in den Entladungszellen und mit einer segmentierten Leuchtstoffschicht, der eine Pixelmatrix-Array umfasst, in dem Entladungszellen für Rot, Grün und Blau zur Bildung eines Pixels gruppiert sind, wobei jedes Pixel eine Entladungszelle für Blau umfaßt, die je zwei benachbarten Pixeln gemeinsam ist.

2. Plasmafarbbildschirm gemäß Anspruch 1,
**dadurch gekennzeichnet,**
**dass** die Entladungszellen in parallelen langgestreckten Kanälen angeordnet sind

3. Plasmafarbbildschirm gemäß Anspruch 1,
**dadurch gekennzeichnet,**
**dass** das Segment der Leuchtstoffschicht der Entladungszelle für Blau Europium(II)-dotiertes Bariummagnesiumaluminat enthält.

4. Plasmafarbbildschirm gemäß Anspruch 1,
**dadurch gekennzeichnet,**
**dass** jedes Pixel eine blaue und eine rote Entladungszelle umfaßt, die je zwei benachbarten Pixeln gemeinsam ist.
